# EUROPEAN PATENT APPLICATION

(11) **EP 4 831 711 A1**
(43) Date of publication of application: **28.10.2026**
(21) Application number: 24905702.7
(22) Date of filing: 20.09.2024
(51) Int. Cl.: G02B 7/10, G02B 26/00, G02B 3/14

(54) **OPTICAL LENS, HOUSING STRUCTURE THEREOF, AND OPTICAL DEVICE**

(30) Priority: 21.12.2023 CN 202323510120 U
(71) Applicant: BYD Company Limited, Shenzhen, Guangdong 518118 (CN)
(72) Inventor: GONG, Qing, Shenzhen, Guangdong 518118 (CN); SUN, Yaxuan, Shenzhen, Guangdong 518118 (CN); SONG, Yi, Shenzhen, Guangdong 518118 (CN); ZUO, Hong, Shenzhen, Guangdong 518118 (CN); WANG, Baoqing, Shenzhen, Guangdong 518118 (CN)
(74) Representative: Mathys & Squire
(86) International application number: PCT/CN2024/120214
(87) International publication number: WO 2025/130210

(57) **Abstract**

An optical lens, a housing structure thereof, and an optical device. The housing structure includes a first mounting portion, a second mounting portion, a first optical member and a second optical member. The first optical member is arranged on one of the first mounting portion and the second mounting portion, and the second optical member is arranged on the other of the first mounting portion and the second mounting portion. The first mounting portion and the second mounting portion are spaced apart in a first direction, such that a chamber suitable for receiving an optical liquid can be formed between the first optical member and the second optical member; the position of at least one of the first mounting portion and the second mounting portion in the first direction can be adjusted.

## Description

### CROSS-REFERENCE TO RELATED APPLICATIONS

The present disclosure claims priority to Chinese Patent Application No. 202323510120.X, entitled "OPTICAL LENS, HOUSING STRUCTURE THEREOF, AND OPTICAL DEVICE", filed on December 21, 2023, which is incorporated herein by reference in its entirety.

### FIELD

The present disclosure relates to the field of optical focusing technologies, and in particular, to an optical lens, a housing structure thereof, and an optical device.

### BACKGROUND

In the related art, an optical lens usually comprises a plurality of lenses, gas is filled between the plurality of lenses, and the focal length of an optical device is adjusted by adjusting the distance between the plurality of lenses. The shape of the lens is fixed, and the fluid between the lens and the light source is air, and the refractive index of the air is low. In order to realize a wide focal length adjustment range, the size of the optical lens must be increased, and the optical lens occupies a larger space, which is not conducive to lightweight design of the optical device.

### SUMMARY

An object of the present disclosure is to provide an optical lens, a housing structure thereof, and an optical device to at least partially solve technical problems existing in the related art.

In order to achieve the above object, according to a first aspect of the present disclosure, a housing structure of an optical lens is provided, and the housing structure includes a first mounting portion, a second mounting portion, an optical liquid, a first optical member, and a second optical member.

The first optical member is arranged on one of the first mounting portion and the second mounting portion, and the second optical member is arranged on the other of the first mounting portion and the second mounting portion.

The first mounting portion and the second mounting portion are spaced apart in a first direction, such that a chamber suitable for receiving the optical liquid can be formed between the first optical member and the second optical member.

Especially, a position of at least one of the first mounting portion and the second mounting portion in the first direction is adjustable.

In an embodiment, the first mounting portion is positionally adjustably connected to the second mounting portion in the first direction.

In an embodiment, the first mounting portion is arranged with an internal thread section extending along the first direction, and the second mounting portion is arranged with an external thread section.

The external thread section is threadedly connected to the internal thread section, to ensure that the first mounting portion is configured to be positionally adjustably connected to the second mounting portion along the first direction.

In an embodiment, the first mounting portion includes a first main body and a first annular skirt formed at a first end of the first main body, and the first optical member is connected to the first annular skirt.

The first main body is arranged with the internal thread section.

In an embodiment, the second mounting portion includes a second main body and a second annular skirt, the second annular skirt is formed at a second end of the second main body, and the second optical member is connected to the second annular skirt.

The second main body is arranged with the external thread section.

In an embodiment, the housing structure further includes a mounting member, the first optical member is connected to the mounting member, and the mounting member is mounted on the first mounting portion.

In an embodiment, in the first direction, the mounting member is positionally adjustable with respect to the first mounting portion.

In an embodiment, the housing structure further includes a screw rod and a nut, a threaded hole is formed on the first mounting portion, a through hole is formed on the mounting member, and the screw rod passes through the through hole and is threadedly connected to the threaded hole.

The nut is connected to the screw rod to mount the mounting member on the first mounting portion.

In an embodiment, the mounting member is configured as an annular member.

A plurality of screw rods and a plurality of nuts are provided in a one-to-one correspondence;

The plurality of screw rods and the plurality of nuts are spaced apart along a circumferential direction of the mounting member.

In an embodiment, the housing structure further includes an elastic member, the elastic member is arranged between the first mounting portion and the mounting member, one end of the elastic member abuts the first mounting portion, and the other end of the elastic member abuts the mounting member.

In an embodiment, the elastic member is a spring, and the spring is sleeved over the screw rod.

In an embodiment, the housing structure further includes a sealing ring, the sealing ring is arranged between the first optical member and the second optical member, and the sealing ring is configured to seal a gap between the first optical member and the second optical member.

The sealing ring, the first optical member, and the second optical member collectively define the chamber.

In an embodiment, the housing structure further includes a liquid injection hole, a first end of the liquid injection hole is in communication with the chamber, and the other end of the liquid injection hole is adapted to be connected to a liquid injection structure. In an embodiment, a projection of the first optical member in the first direction is a first circle, and the diameter of the first circle is greater than or equal to 50 mm; and/or,

a projection of the second optical member in the first direction is a second circle, and the diameter of the second circle is greater than or equal to 50 mm.

In an embodiment, the first optical member is a flexible optical film.

The second optical member is an optical glass. In an embodiment, the projection of the first optical member in the first direction is circular.

The thicknesses of the first optical member are not equal along a direction away from the center of the first optical member.

According to a second aspect of the present disclosure, an optical lens is provided, wherein the optical lens includes an optical liquid and the housing structure of the optical lens is as described above, and the optical liquid is filled in the chamber.

According to a third aspect of the present disclosure, an optical device is provided, the optical device includes a light source and the optical lens as described above, and the optical lens and the light source are arranged along the first direction.

According to the above technical solution, since the first optical member and the second optical member are respectively arranged on the first mounting portion and the second mounting portion, the distance between the first mounting portion and the second mounting portion along the first direction (such as the propagation direction of light) can be adjusted, and by adjusting the distance between the first mounting portion and the second mounting portion, the distance between the first optical member and the second optical member along the first direction (such as the propagation direction of light) can be adjusted. Further, by filling the chamber between the first optical member and the second optical member with the optical liquid having a high refractive index, in the optical lens provided by the present disclosure, by adjusting the distance between the first optical member and the second optical member in a small range, the focal length of the optical lens can be adjusted in a large range. That is, by adjusting the distance between the first optical member and the second optical member and filling the chamber with the optical liquid having a high refractive index, it is advantageous to reduce the size of the optical lens while realizing a large range of focal length adjustment of the optical lens, and it is convenient to reduce the weight of the optical lens. That is to say, compared with the technical solutions in the related art in which the optical lens comprises a plurality of lenses, and the fluid filled between the plurality of lenses is air, the size of the optical lens provided by the present disclosure is smaller when the focusing range is the same, which is beneficial to reducing the size of the optical lens and facilitating lightweight design of the optical lens.

Other features and advantages of the present disclosure will be described in detail in the detailed description section that follows.

### BRIEF DESCRIPTION OF THE DRAWINGS

The accompanying drawings are intended to provide a further understanding of the present disclosure, and constitute a part of the specification, and together with the following detailed description, serve to explain the present disclosure, but are not intended to limit the present disclosure. In the drawings:
FIG. 1 is a schematic three-dimensional structural diagram of an optical lens according to an exemplary embodiment of the present disclosure.
FIG. 2 is an exploded schematic view of a housing structure of an optical lens according to an exemplary embodiment of the present disclosure.
FIG. 3 is a schematic cross-sectional view of an optical lens according to an exemplary embodiment of the present disclosure.
FIG. 4 is a schematic three-dimensional structural diagram of a first mounting portion in a housing structure of an optical lens according to an exemplary embodiment of the present disclosure.
FIG. 5 is a schematic three-dimensional structural diagram of a second mounting portion in a housing structure of an optical lens according to an exemplary embodiment of the present disclosure.
FIG. 6 is a schematic structural block diagram in which a liquid injection structure and a housing structure of an optical lens according to an exemplary embodiment of the present disclosure are connected.
FIG. 7 is a schematic structural block diagram of an optical device according to an exemplary embodiment of the present disclosure.

### DETAILED DESCRIPTION

Specific embodiments of the present disclosure will be described in detail below with reference to the accompanying drawings. It will be understood that the specific embodiments described herein are intended to illustrate and explain the present disclosure only, and are not intended to limit the present disclosure.

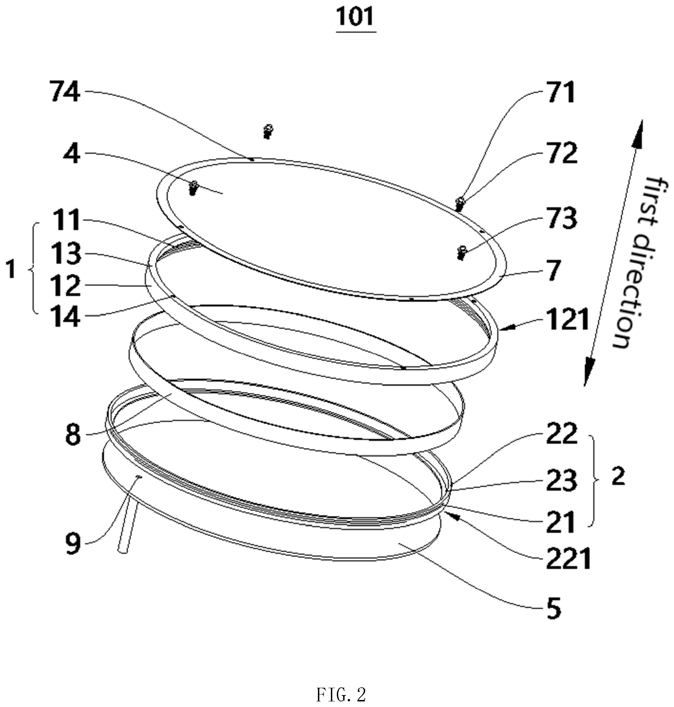

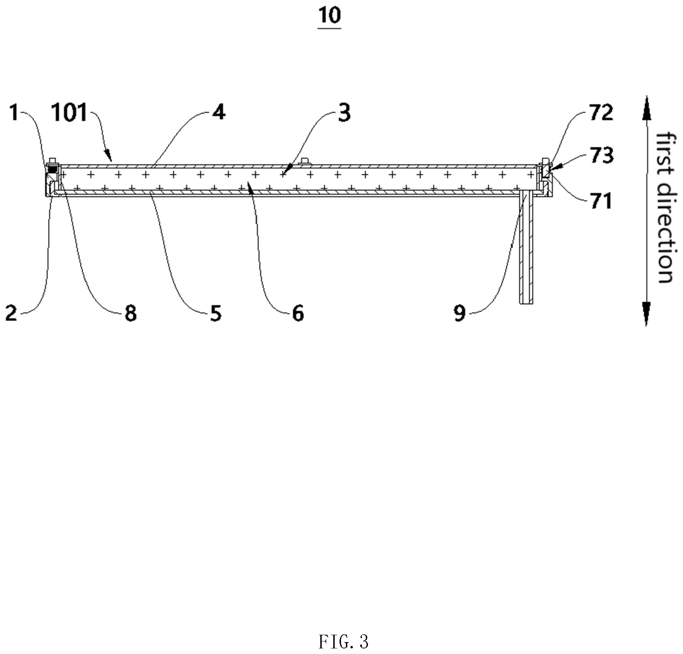

In the present disclosure, unless otherwise specified, the orientation or positional relationship indicated by the use of orientation words such as "upper", "lower", "left", "right", or the like. is defined based on the plan orientation shown in the corresponding drawings, and is only for the convenience of describing the present disclosure and simplifying the description, and does not indicate or imply that the device or element referred to must have a specific orientation, as well as a specific orientation configuration and operation, and therefore will not be understood as a limitation of the present disclosure, and the terms "inside, outside" refer to the inside and outside of the corresponding structural contour. In the drawings and herein, the "first direction" generally refers to the front-rear direction with respect to the contour of the optical lens itself, and may also refer to the propagation direction of the optical lens with respect to light, specifically, referring to the directions shown in FIGS. 2 and 3.

It will be noted that terms such as "first" and "second" are used to distinguish one element from another element, and do not have sequence or importance. In addition, in the description with reference to the drawings, the same reference numerals in different drawings denote the same elements.

In the description of the present disclosure, it will also be noted that, unless explicitly specified and limited otherwise, the terms "arrangement", "connection", "connection to", and "installation" will be understood in a broad sense, for example, it may be a fixed connection, a detachable connection, or an integral connection; It may be directly connected or indirectly connected through an intermediary. For those of ordinary skill in the art, the specific meanings of the above terms in the present disclosure will be understood according to specific circumstances.

As mentioned above, in the related art, the shape of the lens is fixed, and the fluid between the lens and the light source is air, and the refractive index of the air is low. In order to realize a wide focal length adjustment range, the size of the optical lens must be increased, and the optical lens occupies a large space, which is not conducive to lightweight design of the optical device.

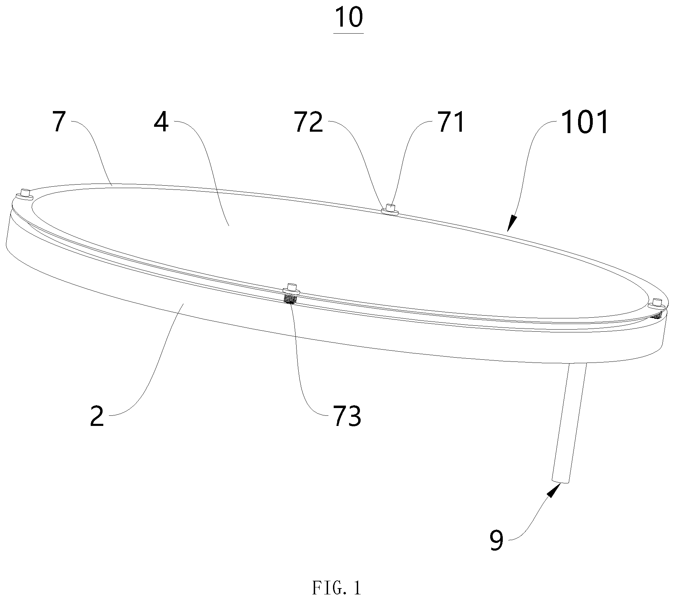

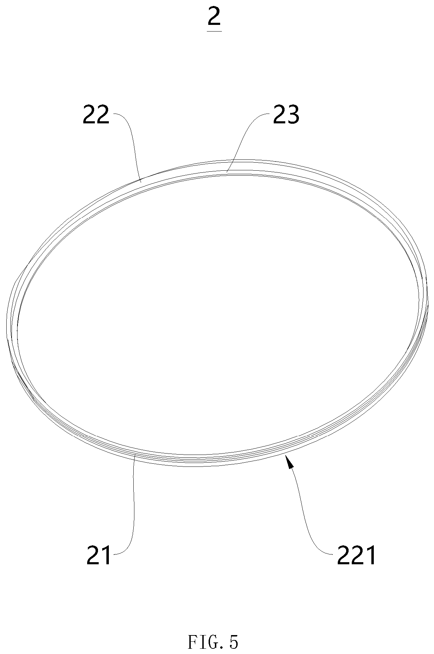

In view of this, as shown in FIGS. 1 to 7, according to a first aspect of the present disclosure, a housing structure 101 of an optical lens 10 is provided, the housing structure 101 includes a first mounting portion 1, a second mounting portion 2, a first optical member 4 and a second optical member 5, the first optical member 4 is arranged on one of the first mounting portion 1 and the second mounting portion 2, and a second optical member 5 is arranged on the other of the first mounting portion 1 and the second mounting portion 2, and the first mounting portion 1 and the second mounting portion 2 are spaced apart in a first direction, such that a chamber 6 suitable for receiving an optical liquid 3 can be formed between the first optical member 4 and the second optical member 5, wherein a position of at least one of the first mounting portion 1 and the second mounting portion 2 in the first direction can be adjusted.

For example, the position of the first mounting portion 1 in the first direction may be adjusted individually, the position of the second mounting portion 2 in the first direction may be adjusted individually, or the positions of the first mounting portion 1 and the second mounting portion 2 in the first direction may be adjusted simultaneously.

According to the physical properties of light, it is known that different liquids have different compositions and different refractive indices, that is, different types of optical liquids 3 may have different refractive indices.

In the optical lens 10 described above, since the chamber 6 suitable for receiving the optical liquid 3 can be formed between the first optical member 4 and the second optical member 5, the refractive indices of different types of optical liquids 3 can be different, and by suitably selecting a type of optical liquid 3 filled in the chamber 6, the entire chamber 6 can have different refractive indices, and when it is necessary to obtain the optical lens 10 having a large focal length adjustment range, the optical liquid 3 having a higher refractive index can be selected.

According to the above technical solution, since the first optical member 4 and the second optical member 5 are arranged on the first mounting portion 1 and the second mounting portion 2, respectively, the distance between the first mounting portion 1 and the second mounting portion 2 along the first direction (for example, the propagation direction of light) can be adjusted, and by adjusting the distance between the first mounting portion 1 and the second mounting portion 2, the distance between the first optical member 4 and the second optical member 5 along the first direction (for example, the propagation direction of light) can be adjusted. Further, by filling the chamber 6 between the first optical member 4 and the second optical member 5 with the optical liquid 3 having a high refractive index, in this way, in the optical lens 10 provided by the present disclosure, by adjusting the distance between the first optical member 4 and the second optical member 5 in a small range, the focal length of the optical lens 10 can be adjusted in a large range. That is, by adjusting the distance between the first optical member 4 and the second optical member 5 and filling the chamber 6 with the optical liquid 3 having a high refractive index, it is advantageous to reduce the size of the optical lens 10 while realizing a large range of focal length adjustment of the optical lens 10, and it is convenient to reduce the weight of the optical lens 10. That is to say, compared with the technical solutions in the related art in which the optical lens 10 comprises a plurality of lenses, and the fluid filled between the plurality of lenses is air, the size of the optical lens 10 provided by the present disclosure is smaller when the focusing range is the same, which is beneficial to reducing the size of the optical lens 10 and facilitates lightweight design of the optical lens 10.

In the present disclosure, the first mounting portion 1 and the second mounting portion 2 may be directly connected or may be connected by an intermediate member, and the present disclosure is not limited thereto. In an embodiment of the present disclosure, the first mounting portion 1 is positionally adjustably connected to the second mounting portion 2 along the first direction, that is, the first mounting portion 1 and the second mounting portion 2 are directly connected, and this design is advantageous in simplifying the structure of the optical lens 10, reducing the space occupied by the optical lens 10, and reducing the weight of the optical lens 10.

The present disclosure does not limit the connection relationship between the first mounting portion 1 and the second mounting portion 2, as long as the first mounting portion 1 and the second mounting portion 2 can adjust the positions of the first optical member 4 and the second optical member 5 along the first direction. As an embodiment of the present disclosure, as shown in FIGS. 2 and 3, the first mounting portion 1 is arranged with an internal thread section 11 extending along the first direction, and the second mounting portion 2 is arranged with an external thread section 21, and the external thread section 21 is threadedly connected to the internal thread section 11, to ensure that the first mounting portion 1 is configured to be positionally adjustably connected to the second mounting portion 2 along the first direction. By changing the length of the threaded connection portion between the internal thread section 11 of the first mounting portion 1 and the external thread section 21 of the second mounting portion 2, the distance between the first mounting portion 1 and the second mounting portion 2 can be changed, and the distance between the first optical member 4 and the second optical member 5 in the first direction (for example, the propagation direction of light) can be changed, thereby realizing adjustment of the focal length of the optical lens 10, and at the same time, making the operation of adjusting the position between the first mounting portion 1 and the second mounting portion 2 relatively simple.

Further, since the first mounting portion 1 and the second mounting portion 2 are connected by a screw, the optical lens 10 can adjust the distance between the first mounting portion 1 and the second mounting portion 2 without arranging other components (for example, a motor, or the like). The structure of the optical lens 10 is relatively simple, which saves the cost incurred by arranging other components to adjust the distance between the first mounting portion 1 and the second mounting portion 2. Meanwhile, the structure of the optical lens 10 is simplified, the space occupied by the optical lens 10 is reduced, and the weight of the optical lens 10 is reduced.

The present disclosure does not limit the positional relationship between the first optical member 4 and the second optical member 5 on the first mounting portion 1 and the second mounting portion 2. The first optical member 4 may be mounted on the first mounting portion 1 or the second mounting portion 2, and the second optical member 5 may be mounted on the first mounting portion 1 or the second mounting portion 2, as long as the first optical member 4 and the second optical member 5 can cooperate with each other and the focal length of the optical lens 10 can be adjusted. In an embodiment of the present disclosure, as shown in FIGS. 1 and 2, the first optical member 4 is mounted on the first mounting portion 1 and the second optical member 5 is mounted on the second mounting portion 2.

The present disclosure does not limit the specific configuration of the first mounting portion 1. For the embodiment in which the first optical member 4 is mounted on the first mounting portion 1 and the second optical member 5 is mounted on the second mounting portion 2, in order to facilitate mounting of the first optical member 4 on the first mounting portion 1, as shown in FIGS. 2 and 3, in an embodiment, the first mounting portion 1 includes a first main body 12 and a first annular skirt 13 formed at a first end 121 of the first main body 12; the first optical member 4 is connected to the first annular skirt 13, and the first main body 12 is arranged with an internal thread section 11. In this way, the first optical member 4 can be easily mounted on the first mounting portion 1.

Further, since the internal thread section 11 is formed on the first main body 12, when the distance between the first mounting portion 1 and the second mounting portion 2 is adjusted, the internal thread section 11 formed on the first main body 12 does not cause mechanical interference with the first optical member 4, which effectively prevents occurrence of damage to the first optical member 4 caused by mechanical interference between the internal thread section 11 and the first optical member 4 when the distance between the first mounting portion 1 and the second mounting portion 2 is adjusted, thereby improving service life of the first optical member 4.

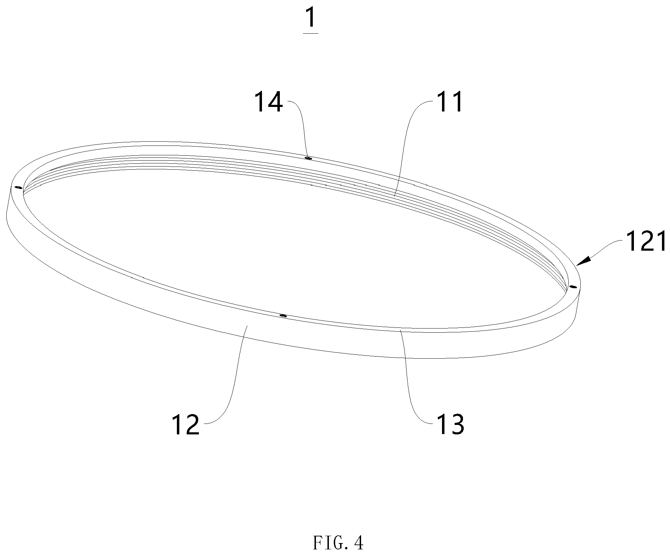

The present disclosure does not limit the specific structure of the second mounting portion 2. In order to facilitate mounting of the second optical member 5 on the second mounting portion 2, as shown in FIGS. 2 and 4, in an embodiment, the second mounting portion 2 includes a second main body 22 and a second annular skirt 23; the second annular skirt 23 is formed at the second end 221 of the second main body 22, the second optical member 5 is connected to the second annular skirt 23, and the second main body 22 is provided with an external thread section 21. In this way, the second optical member 5 can be easily mounted on the second mounting portion 2.

Further, since external thread section 21 is formed on the second main body 22, when the distance between the first mounting portion 1 and the second mounting portion 2 is adjusted, the external thread section 21 formed on the second main body 22 does not cause mechanical interference with the second optical member 5, which effectively prevents occurrence of damage to the second optical member 5 caused by mechanical interference between the external thread section 21 and the second optical member 5 when the distance between the first mounting portion 1 and the second mounting portion 2 is adjusted, thereby improving the service life of the second optical member 5.

For the embodiment in which the first optical member 4 is mounted on the first mounting portion 1 and the second optical member 5 is mounted on the second mounting portion 2, in order to facilitate mounting of the first optical member 4 on the first mounting portion 1, as shown in FIGS. 1 and 2, in an embodiment, the optical lens 10 may further include a mounting member 7, the first optical member 4 is connected to the mounting member 7, and the mounting member 7 is mounted on the first mounting portion 1. In this way, the first optical member 4 is mounted on the first mounting portion 1 by the mounting member 7, and the assembly and disassembly of the first optical member 4 to and from the first mounting portion 1 are relatively simple. In addition, if the first optical member 4 fails or is damaged during use, the mounting member 7 can be directly detached to replace the first optical member 4 with a new one, without disassembling and assembling the entire optical lens 10, thereby effectively reducing the use cost of the optical lens 10.

In order to further increase the focus range of the optical lens 10, in an embodiment, the mounting member 7 with respect to the first mounting portion 1 is positionally adjustable in the first direction. Since the first optical member 4 is connected to the mounting member 7, by adjusting the mounting position of the mounting member 7 on the first mounting portion 1, by adjusting the distance between the mounting member 7 and the first mounting portion 1, the distance between the mounting member 7 and the second mounting portion 2 can be adjusted, and the distance between the first optical member 4 and the second optical member 5 can be adjusted, thereby realizing the focal length adjustment of the optical lens 10. The positionally adjustable mounting member 7 further improves the focusing range of the optical lens 10, and the performance of the optical lens 10 is better. In this way, multi-stage focusing can be realized, for example, first-stage focusing (wide-range focusing) can be realized by adjusting the distance between the first mounting portion 1 and the second mounting portion 2, and second-stage focusing (such as small-range focusing) can be realized by adjusting the distance between the mounting member 7 and the first mounting portion 1, thereby facilitating satisfaction of the requirement of focal length focusing of the optical device 100.

The present disclosure does not limit the connection relationship between the mounting member 7 and the first mounting portion 1, as long as the connection between the mounting member 7 and the first mounting portion 1 is reliable and the distance between the mounting member 7 and the first mounting portion 1 can be adjusted. As an embodiment of the present disclosure, as shown in FIGS. 1 and 2, the housing structure 101 may further include a screw rod 71 and a nut 72, a threaded hole 14 is formed on the first mounting portion 1, a through hole 74 is formed on the mounting member 7, the screw rod 71 passes through the through hole 74 and is threadedly connected to the threaded hole 14, and the nut 72 is connected to the screw rod 71 to mount the mounting member 7 on the first mounting portion 1. In this way, by rotating the nut 72 to adjust the mounting position of the mounting member 7 on the screw rod 71, the distance between the mounting member 7 and the first mounting portion 1 can be adjusted, and the distance between the first optical member 4 and the first mounting portion 1 can be adjusted, so as to realize adjustment of the distance between the first optical member 4 and the second optical member 5, thereby achieving focal length adjustment of the optical lens 10.

For the embodiment in which the mounting member 7 is connected to the first mounting portion 1 by the screw rod 71 and the nut 72, in order to improve the connection strength between the mounting member 7 and the first mounting portion 1, in an embodiment, the mounting member 7 is configured as an annular member, a plurality of screw rods 71 and a plurality of nuts 72 are provided in one-to-one correspondence, and the plurality of screw rods 71 and the plurality of nuts 72 are spaced apart along a circumferential direction of the mounting member 7. In this way, the mounting member 7 is connected to the first mounting portion 1 by the plurality of screw rods 71 and the plurality of nuts 72, and the connection between the mounting member 7 and the first mounting portion 1 is reliable, which effectively prevents occurrence of unstable fixation of the mounting member 7 on the first mounting portion 1, loosening or even detachment of the mounting member 7 from the first mounting portion 1 and failure of normal focusing of the optical lens 10 during use of the optical lens 10 .

Since the mounting member 7 is positionally adjustably connected to the first mounting portion 1 in the first direction, in order to keep the mounting member 7 always at a preset position, in an embodiment, as shown in FIGS. 1 and 2, the housing structure 101 further includes an elastic member 73, the elastic member 73 is arranged between the first mounting portion 1 and the mounting member 7, one end of the elastic member 73 abuts the first mounting portion 1, and the other end of the elastic member 73 abuts the mounting member 7. In this way, the elastic member 73 can always apply an elastic force to the mounting member 7 to move the mounting member 7 in a direction away from the first mounting portion 1, and when it is not necessary to adjust the position of the mounting member 7, by the action of the elastic member 73, it is possible to avoid a situation where the mounting member 7 accidentally moves in the gap between the first mounting portion 1 and the mounting member 7, causing the relative positions of the first optical member 4 and the second optical member 5 to change, affecting the focusing effect of the optical lens 10, or even causing the optical lens 10 to fail to accurately focus.

The present disclosure does not limit the specific type of the elastic member 73, as long as the elastic member 73 can apply an elastic force to the mounting member 7 to move the mounting member 7 in a direction away from the first mounting portion 1, thereby preventing the mounting member 7 from being displaced in the gap between the mounting member 7 and the first mounting portion 1. In an embodiment, the elastic member 73 may be a spring, and the spring may be sleeved over the screw rod 71. In this way, one end of the spring can abut the first mounting portion 1, the other end of the spring can abut the mounting member 7, the mounting member 7 can always be sandwiched between the spring and the nut 72, the mounting member 7 can be reliably positioned on the first mounting portion 1, and the mounting member 7 can be stably mounted on the first mounting portion 1 without designing the elastic member 73 separately, thereby effectively saving the production and manufacturing cost of the optical lens 10.

As another embodiment, the elastic member 73 may be a silicone rubber, the silicone rubber is adapted to be arranged between the mounting member 7 and the first mounting portion 1, one end of the silicone rubber abuts the first mounting portion 1, and the other end of the silicone rubber abuts the mounting member 7.

In order to prevent the optical lens 10 from being filled with the optical liquid 3 and the optical liquid 3 leaking from the optical lens 10, in an embodiment, as shown in FIGS. 1 and 2, the optical lens 10 further includes a sealing ring 8, the sealing ring 8 is arranged between the first optical member 4 and the second optical member 5, the sealing ring 8 is configured to seal a gap between the first optical member 4 and the second optical member 5, and the sealing ring 8, the first optical member 4 and the second optical member 5 may collectively define the chamber 6. In this way, by suitably arranging the sealing ring 8, one end of the sealing ring 8 can abut the first optical member 4 and the other end of the sealing member can abut the second optical member 5, and the sealing effect of the sealing ring 8 is better, which effectively prevents the occurrence of leakage of the optical liquid 3 from the gap between the first optical member 4 and the second optical member 2 and failure of the optical lens 10 to operate normally.

The present disclosure does not limit the connection relationship between the sealing ring 8 and the first optical member 4 and the second optical member 5, and in an embodiment of the present disclosure, one end of the sealing ring 8 may be adhered to the first optical member 4, and the other end of the sealing ring 8 may be adhered to the second optical member 5, to ensure that the sealing ring 8, the first optical member 4, and the second optical member 5 collectively define the chamber 6. As another embodiment, the first optical member 4 and the second optical member 5 may also be arranged with grooves, and both ends of the sealing ring 8 are respectively engaged with the grooves on the first optical member 4 and the second optical member 5, to ensure that the sealing ring 8, the first optical member 4 and the second optical member 5 collectively define the chamber 6. It will be understood that in other embodiments of the present disclosure, the housing structure may not be arranged with the sealing ring 8 described above, and the first mounting portion 1, the second mounting portion 2, the first optical member 4, and the second optical member 5 in the embodiment of FIG. 1 may be directly used to collectively define the chamber 6 described above.

Further, the inner surface of the sealing ring 8 can also cooperate with the first optical member 4 and the second optical member 5 to define the chamber 6 for receiving the optical liquid 3 without adding other structures, which is advantageous in simplifying the overall structure of the optical lens 10 and saving production and manufacturing costs of the optical lens 10.

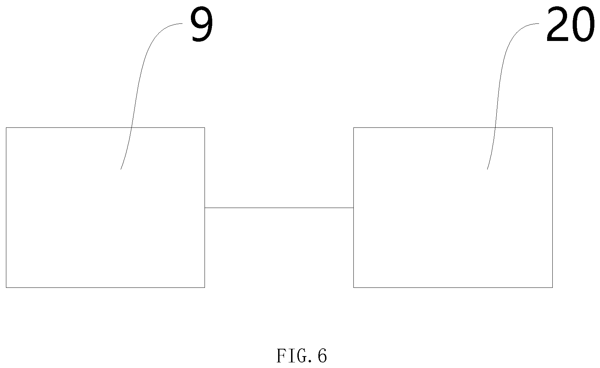

In order to further improve the focusing range of the optical lens 10, in an embodiment, as shown in FIG. 6, the housing structure 101 may further include a liquid injection hole 9, the first end of the liquid injection hole 9 is in communication with the chamber 6, and the other end of the liquid injection hole 9 is adapted to be connected to a liquid injection structure 20. By the liquid injection structure 20 and the liquid injection hole 9, the type of the optical liquid 3 filled in the chamber 6 and the volume of the optical liquid 3 filled in the chamber 6 can be adjusted, in this way, by changing the type of the optical liquid 3 filled in the chamber 6, or changing the volume of the optical liquid 3 filled in the chamber 6 (for example, the refractive index when the optical liquid 3 is filled in the chamber 6 is different from the refractive index when the optical liquid 3 is not filled in the chamber 6), the overall refractive index of the chamber 6 can be changed, and thus the overall refractive index of the optical lens 10 can be changed. That is, when it is necessary to adjust the focal length of the optical device 100, by changing the type of the optical liquid 3 filled in the chamber 6 and/or changing the volume of the optical liquid 3 filled in the chamber 6, the overall refractive index of the optical lens 10 can be adjusted, thereby realizing the focal length adjustment of the optical device 100. Without changing the distance between the first optical member 4 and the second optical member 5, focusing of the optical lens 10 can be realized, which is conducive to further reducing the size of the optical lens 10 and simplifying the structure of the optical lens 10.

The present disclosure is not limited to the specific structure of the liquid injection hole 9, as long as the chamber 6 can be connected to the liquid injection structure through the liquid injection hole 9. As an embodiment of the present disclosure, as shown in the drawing, the liquid injection hole is formed on the second optical member 5, and the liquid injection hole extends in a direction away from the first optical member 4.

Here, the present disclosure does not limit the type of the liquid injection structure 20, as long as the liquid injection structure can adjust the type of the optical liquid 3 filled in the chamber 6 and the volume of the optical liquid 3 filled in the chamber 6. As an embodiment of the present disclosure, the liquid injection structure 20 may be a high-precision syringe pump. The high-precision syringe pump can realize liquid injection or pumping out with a flow rate range of 1 pl/min to 40 ml/min, and can accurately and quickly change the type and volume of the optical liquid 3 filled in the chamber 6.

Here, the present disclosure does not limit the specific shape and size of the first optical member 4 constituting the housing structure 101. In an embodiment, the projection of the first optical member 4 in the first direction is a first circle, and the diameter of the first circle is greater than or equal to 50 mm.

Since the aperture of the first optical member 4 is large, the volume of the chamber 6 defined by the first optical member 4, the second optical member 5, and the sealing ring 8 is large, and for each unit volume of the optical liquid 3 injected into or extracted from the chamber 6, the volume change rate of the optical liquid 3 received in the chamber 6 can be reduced, thereby improving the focusing accuracy of the optical lens 10.

In addition, according to the physical properties of light, under the same conditions, the wavelength of the light is constant, the amount of light passing and the resolution of the optical lens 10 are proportional to the aperture of the optical lens 10, that is, the larger the aperture of the optical lens 10, the larger the amount of light passing and the resolution of the optical lens 10, and the better the optical performance of the optical lens 10. In other words, the first optical member 4 having a larger size is advantageous for improving the optical performance of the optical lens 10, and the light passing amount and resolution of the optical lens 10 are larger.

In an embodiment, a projection of the second optical member 5 in the first direction is a second circle, and the diameter of the second optical member 5 is greater than or equal to 50 mm. Similarly, the second optical member 5 having a larger size is also advantageous for improving the optical performance of the optical lens 10, and the optical lens 10 has a larger amount of light passing and a larger resolution.

The present disclosure does not limit the material of the first optical member 4, as long as the optical performance of the first optical member 4 is good, and as an embodiment of the present disclosure, the first optical member 4 is a flexible optical film. Since the flexible optical film is an optically transparent elastic film, and the optical liquid 3 is filled between the flexible optical film and the second optical member 5. In this way, by changing the volume of the optical liquid 3 filled between the flexible optical film and the second optical member 5, the flexible optical film can be deformed by the squeezing action of the optical liquid 3, and the surface shape and curvature of the flexible optical film can be changed, thereby changing the refractive index of the flexible optical film. In other words, by changing the volume of the optical liquid 3 filled between the flexible film and the second optical member 5, the refractive index of the flexible optical film can also be changed, thereby realizing focusing of the optical lens 10, and further increasing the focusing range of the optical lens 10.

Here, it will be understood that by changing the radius of the flexible optical film, the curvature of the flexible optical film can be changed, to ensure that the flexible optical film has different focusing ranges. In this way, by suitably designing the size of the flexible optical film, the flexible optical film can have a large focusing range, and by continuously injecting or extracting the optical liquid 3, continuous zooming is achieved.

It will be noted that increasing the aperture of the first optical member 4 allows the flexible optical film to have a larger focusing range, and at the same time, the volume of the chamber 6 defined by the first optical member 4, the second optical member 5, and the sealing ring 8 can be increased, thereby increasing the volume of the optical liquid 3 received in the chamber 6, and for each unit volume of the optical liquid 3 injected into or extracted from the chamber 6, the volume change rate of the optical liquid 3 received in the chamber 6 can be reduced, thereby improving the focusing accuracy of the optical lens 10.

At the same time, when the size of the flexible optical film is unchanged, by increasing the thickness of the chamber 6 in the first direction (for example, the propagation direction of light) and/or increasing the volume of the chamber 6, the overall refractive index of the chamber 6 can be changed, to ensure that the optical lens 10 can have a different focusing range. In this way, by suitably designing the size of the chamber 6, the flexible optical film can also have a larger focusing range. In addition, since the flexible optical film generally has a low elastic modulus, high tear resistance and high elongation at break, the working temperature range of the flexible optical film is large, and the flexible optical film can be adapted to various complex working conditions and environmental conditions, thereby effectively improving service life of the optical lens 10.

The present disclosure does not limit the type of the flexible optical film, as long as the flexible optical film can be deformed under the squeezing action of the optical liquid 3 to adjust the focal length of the optical lens 10. As an embodiment of the present disclosure, the first optical member 4 is a PDMS film. The shape of the PDMS film is determined by a prepolymer-curing agent ratio, elastic modulus, Poisson's ratio, film thickness, initial film shape, filled liquid pressure and other factors, and is independent of the filled liquid. The PDMS film has a silicon-oxygen-silicon main chain molecular structure, an extremely low elastic modulus, high tear resistance and high elongation at break. With a working temperature range of -45 to 200 °C, the PDMS film has good performance and is suitable for various complex working conditions and environmental conditions.

In addition, by changing the ratio of the prepolymer to the curing agent in the PDMS film, for example, the ratio can be increased from 5:1 to 40:1, the Young's modulus of the PDMS film can be reduced from 1-3 MPa to 0.01-0.1 MPa, and the deformation and curvature of the PDMS film can be increased under the same film thickness, liquid pressure, and other conditions, thereby further increasing the zooming range of the optical lens 10.

As another embodiment, the first optical member 4 may be a silicon dioxide and titanium dioxide composite film.

In order to prevent the occurrence of a phenomenon of spherical aberration in the first optical member 4 due to light rays incident on the first optical member 4 from different positions having different focal points from the first optical member 4, resulting in image blurring and distortion, in an embodiment, the projection of the first optical member 4 in the first direction is circular, and along a direction away from the center of the first optical member 4, the thicknesses of the first optical member 4 are not equal. In this way, by suitably designing the thickness of the first optical member 4, the curvature radius distribution of the first optical member 4 can be changed, thereby reducing the spherical aberration phenomenon of the first optical member 4 and improving the imaging quality of the optical lens 10.

In the present disclosure, the first optical member 4 may have any suitable shape, to ensure that the thicknesses of the first optical member 4 are not equal. As an exemplary embodiment of the present disclosure, in the direction away from the center of the first optical member 4, the first optical member 4 may be configured as an aspherical film of gradually increasing thickness (similar to an aspherical lens used as an eyeglass lens), thereby reducing the spherical aberration of the first optical member 4. The present disclosure does not limit the material of the second optical member 5, as long as the optical performance of the second optical member 5 is good. As an embodiment of the present disclosure, the second optical member 5 may be an optical glass. As another embodiment, the second optical member 5 may be an optical crystal, or the like.

The present disclosure does not limit the type of the optical liquid 3, as long as the optical liquid 3 can have high transparency and chemical stability, and can meet the use requirements of the optical lens 10. As an embodiment of the present disclosure, the optical liquid 3 may include a diiodomethane liquid. As another embodiment, the optical liquid 3 may be purified water, a nanomaterial solution, or the like.

According to a second aspect of the present disclosure, an optical lens 10 is provided. The optical lens 10 can include the optical liquid 3 described above and the housing structure 101 described above, and the optical liquid 3 is filled in the chamber 6.

The optical lens 10 has all the advantages of the housing structure 101 of the optical lens 10 described above, which will not be described in detail here.

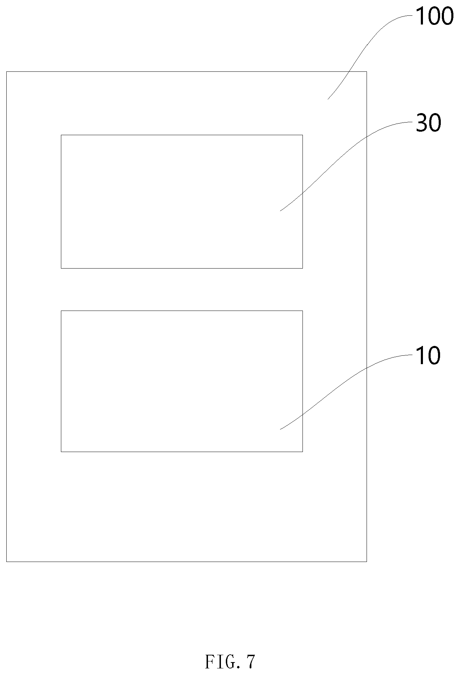

According to a third aspect of the present disclosure, as shown in FIG. 7, an optical device 100 is provided, the optical device 100 includes a light source 30 and the optical lens 10 described above, and the optical lens 10 and the light source 30 are arranged along the first direction. In this way, the optical lens 10 can focus the light emitted from the light source 30, thereby making the image of the optical device 100 clear.

Here, the present disclosure does not limit the specific type of the optical device 100, and the optical device 100 may be any optical device 100 suitable for employing the optical lens 10. For example, the optical device 100 can be a lamp, a projection device, a telescope, a night vision device, or the like. The lamp can be a chandelier, a desk lamp, a vehicle light, or the like; the projection device can be a projector, a laser television, or the like, and the present disclosure is not limited thereto.

In summary, by rotating the nut 72, the position of the first optical member 4 and the second optical member 5 can be adjusted, the volume of the chamber 6 arranged between the first optical member 4 and the second optical member 5 can be changed, and by adjusting the position between the optical lens 10 and the light source 30, the optical lens 10 can realize initial focusing of the optical device 100.

At the same time, when the optical device 100 is in use, by adjusting the distance between the first mounting portion 1 and the second mounting portion 2 and adjusting the type and/or volume of the optical liquid 3 filled in the chamber 6, the refractive index of the chamber 6 and/or the first optical member 4 is changed, and the focal length adjustment of the optical device 100 can be realized.

In addition, by suitably designing the radius of curvature of the first optical member 4, the spherical aberration phenomenon of the first optical member 4 can be effectively corrected, thereby making the image of the optical lens 10 clear.

The preferred embodiments of the present disclosure have been described in detail above with reference to the accompanying drawings, but the present disclosure is not limited to the specific details in the above embodiments, and a variety of simple modifications can be made to the technical solutions of the present disclosure within the scope of the technical concept of the present disclosure, and these simple modifications all belong to the protection scope of the present disclosure.

In addition, it will be noted that the specific technical features described in the above described detailed description can be combined in any suitable manner unless there is no contradiction, and in order to avoid unnecessary repetition, various possible combinations will not be further described in the present disclosure.

In addition, any combination of various embodiments of the present disclosure may be made, and it will be regarded as the contents disclosed in the present disclosure as long as it does not depart from the idea of the present disclosure.

## Claims

1. A housing structure (101) of an optical lens (10), comprising a first mounting portion (1), a second mounting portion (2), a first optical member (4) and a second optical member (5);
the first optical member (4) being arranged on one of the first mounting portion (1) and the second mounting portion (2), and the second optical member (5) being arranged on the other of the first mounting portion (1) and the second mounting portion (2);
the first mounting portion (1) and the second mounting portion (2) being spaced apart in a first direction, such that a chamber (6) suitable for receiving an optical liquid (3) can be formed between the first optical member (4) and the second optical member (5);
a position of at least one of the first mounting portion (1) and the second mounting portion (2) in the first direction being adjustable.

2. The housing structure (101) according to claim 1, wherein the first mounting portion (1) is positionally adjustably connected to the second mounting portion (2) in the first direction.

3. The housing structure (101) according to claim 2, wherein the first mounting portion (1) is arranged with an internal thread section (11) extending along the first direction, and the second mounting portion (2) is arranged with an external thread section (21);
the internal thread section (21) is threadedly connected to the external thread section (11), to ensure that the first mounting section (1) is configured to be positionally adjustably connected to the second mounting section (2) along the first direction.

4. The housing structure (101) according to claim 3, wherein the first mounting portion (1) comprises a first main body (12) and a first annular skirt (13) formed at a first end (121) of the first main body (12), and the first optical member (4) is connected to the first annular skirt (13);
the first main body (12) is arranged with the internal thread section (11).

5. The housing structure (101) according to claim 3 or 4, wherein the second mounting portion (2) comprises a second main body (22) and a second annular skirt (23) formed at a second end (221) of the second main body (22), and the second optical member (5) is connected to the second annular skirt (23);
the second main body (22) is arranged with the external thread section (21).

6. The housing structure (101) according to any one of claims 3 to 5, further comprising a mounting member (7), the first optical member (4) being connected to the mounting member (7), the mounting member (7) being mounted on the first mounting portion (1).

7. The housing structure (101) according to claim 6, wherein in the first direction, the mounting member (7) is positionally adjustable with respect to the first mounting portion (1).

8. The housing structure (101) according to claim 7, further comprising a screw rod (71) and a nut (72), a threaded hole (14) being formed on the first mounting portion (1), a through hole (74) being formed on the mounting member (7), the screw rod (71) passing through the through hole (74) and being threadedly connected to the threaded hole (14);
the nut (72) being connected to the screw (71) to mount the mounting member (7) on the first mounting portion (1).

9. A housing structure (101) according to claim 8, wherein the mounting member (7) is configured as an annular member;
a plurality of screw rods (71) and a plurality of nuts (72) are provided in a one-to-one correspondence;
the plurality of screw rods (71) and the plurality of nuts (72) are spaced apart along the circumferential direction of the mounting member (7).

10. The housing structure (101) according to claim 8 or 9, further comprising an elastic member (73), the elastic member (73) being arranged between the first mounting portion (1) and the mounting member (7), one end of the elastic member (73) abutting the first mounting portion (1) , and the other end of the elastic member (73) abutting the mounting member (7).

11. The housing structure (101) according to claim 10, wherein the elastic member (73) is a spring and the spring is sleeved over the screw rod (71).

12. The housing structure (101) according to any one of claims 1 to 11, further comprising a sealing ring (8) , the sealing ring (8) being arranged between the first optical member (4) and the second optical member (5), the sealing ring (8) being configured to seal a gap between the first optical member (4) and the second optical member (5);
the sealing ring (8), the first optical member (4) and the second optical member (5) collectively defining the chamber (6).

13. The housing structure (101) according to any one of claims 1 to 12, further comprising a liquid injection hole (9), the first end of the liquid injection hole (9) being in communication with the chamber (6), and the other end of the liquid injection hole (9) being adapted to be connected to a liquid injection structure (20).

14. A housing structure (101) according to any one of claims 1 to 13, wherein a projection of the first optical member (4) in the first direction is a first circle, and the diameter of the first circle is greater than or equal to 50 mm; and/or,
a projection of the second optical member (5) in the first direction is a second circle, and the diameter of the second optical member (5) is greater than or equal to 50 mm.

15. The housing structure (101) according to any one of claims 1 to 14, wherein the first optical member (4) is a flexible optical film;
the second optical member (5) is an optical glass.

16. A housing structure (101) according to any one of claims 1 to 15, wherein the projection of the first optical member (4) in the first direction is circular;
along a direction away from the center of the first optical member (4), the thicknesses of the first optical member (4) is not equal.

17. An optical lens (10), comprising an optical liquid (3) and the housing structure (101) of the optical lens (10) according to any one of claims 1 to 16, the optical liquid (3) being filled in the chamber (6).

18. An optical device (100), comprising a light source (30) and the optical lens (10) according to claim 17, the optical lens (10) and the light source (30) being arranged along the first direction.
